# EUROPEAN PATENT SPECIFICATION

(11) **EP 0 505 430 B1**
(45) Date of publication and mention of the grant of the patent: **09.04.1997**
(21) Application number: 91900988.6
(22) Date of filing: 12.12.1990
(51) Int. Cl.: F02P 1/02, F02P 3/06

(54) **AN ARRANGEMENT IN GENERATORS FOR IGNITION SYSTEMS GENERATING VOLTAGES FOR CONTROL AND CHARGING**
SPANNUNGS- UND LADUNGSGENERATORANORDNUNG FÜR ZÜNDSYSTEME
AGENCEMENT POUR GENERATEURS DE TENSIONS DE COMMANDE ET DE CHARGEMENT DANS DES SYSTEMES D'ALLUMAGE

(30) Priority: 13.12.1989 SE 8904208
(43) Date of publication of application: 30.09.1992
(73) Proprietor: SEM AB, S-662 00 Amal (SE)
(72) Inventor: AGREN, Anders, S-662 00 Amal (SE); BENGTSSON, Jörgen, S-662 03 Svanskog (SE)
(74) Representative: Grahn, Thomas
(86) International application number: SE9000826
(87) International publication number: WO9109223

(56) References cited:
- DE-A- 3 223 039
- DE-A- 3 618 895
- SE-B- 446 650
- US-A- 3 495 579

## Description

### Technical field

In capacitor ignition systems for single-cylindrical internal combustion engines there is a need for at least two different voltage levels, that is, one for charging the capacitorcomponent of the system and one for controlling the electronic circuits triggering the sparks. Often there is also a need for voltage supply to other electronic circuits, which are not associated with the ignition system proper. It is difficult to combine in a simple and inexpensive manner a generator winding for e.g. charging said ignition capacitor and providing at the same time a suitable control signal to the control electronics for the spark discharge. It is desirable in practice that in order to solve the above problems, for example, one single iron core is used which carries the necessary windings for generating control voltage as well as charging voltage. In doing so it should of course be pursued that the control voltage part requires the smallest winding space possible in order that it be possible to expand the other generator windings to the necessary extent. It is also desirable that it be possible to wind all windings in a simple manner in the same manufacturing process.

### Prior art

The magneto core legs, which are to carry the windings, are suitably arranged in star shape for cooperation with the magneto wheel rotating thereabout. Such structures belong to prior art and in this connection reference can be made to the Swedish Patent No. 425 423 and the German Ditto No. 32 23 039 and the Swedish Appln No. 8803329-5.

Additional exemples are SE-B-446 650 and DE-A1-36 18 895 indicating generators for internal combustion engine including an ignition system with a charge capacitor. In SE-B-446650 one section, including one leg, of the stationary core, is carrying the winding for charging the capacitor, another section, including two legs, is carrying the windings for controlling the ignition process and the legs of a third section are carrying windings which are used for supplying energy to light and switching devices. The windings of the three sections are all respectively wound with a different number of turns.

In DE-A1-36 18 895 there is a similar system with a section with two legs of the stationary core carrying charging windings, another section with three legs carrying the ignition control windings and a third section with windings for supplying energy of light and switcing devices.

None of the references indicate a system where all the windings are wound in the same way and in one and same working operation.

### Summary of the invention

The generator for internal combustion engine, according to the invention, includes an ignition system with a charge capacitor, with a particular arrangement of its elements. The generator comprises a flywheel with magnet poles distributed thereon, said flywheel cooperating with a magnet core having several regularly distributed legs carrying windings. The flywheel comprises at least two sections, one without asymmetry with as many north poles as south poles regularly distributed on the flywheel, and one section which exhibits asymmetry with respect to the regular distribution of the magnet poles at the symmetrical section. The periphery length of the asymmetrical section corresponds to two core leg pitches. The legs of the core have windings which electrically form a first group, including two windings on adjecent legs, for controlling the ignition process of said internal combustion engine, and a second group, for charging the capacitor. The windings in the first group are connected such that the voltages induced will cancel another when there is a uniformly field-alternating magnet flux through the legs. The windings in the second group are connected such that they cooperate to form a combined voltage created by induction from the symmetrical as well as the asymmetrical section of the magnet pole path.

By the present invention the advantage is attained that, from a manufacturing point of view, the generator part as well as the control voltage part can be wound in essentially the same winding process, and that properly adjusted charging as well as controlling voltages can be generated at the same time. By the invention it is also attained that unnecessary disturbances in the magnet system are eliminated, a well defined output signal then being possible to obtain.

Features characterizing the present invention will appear from the accompanying claims.

### Description of the figures

The invention will be described in greater detail with reference to the accompanying drawings, which illustrate diagrammatically structures of an arrangement according to the invention.

Fig. 1 shows a diagrammatical elevation of a generator arrangement in one rotational position.

Fig. 2 shows the arrangement of Fig. 1 in a second rotational position.

Fig. 3 illustrates a further arrangement.

Fig. 4 shows a modification.

### Description of a first embodiment

The arrangement comprises a magneto flywheel carrying six magnets 2-4, 6-8 spaced along the periphery of the flywheel. The section 5 between magnet pole 4 and magnet pole 6 does not include any magnet poles. Centrally of the flywheel a generator core 9 is provided having eight core legs 10-17 radially projecting from said flywheel 1. The spacing of legs 10-17 is such that it agrees with the spacing or pitch with respect to magnet poles 2-4, 6-8 and the space corresponding to section 5, to which section two legs are attributed. Neither a shaft for support of wheel 1 nor an associated internal cumbustion engine are shown. Windings or coils 18-25 are provided on the core legs 10-17. It is assumed in this case that all coils are wound using a wire of one and the same dimension or gauge and in one and the same direction. The windings 19-24 are connected in series such that they coact in view of building up or increasing voltage. Points for tapping the voltages generated in the windings are designated 26 and 27. On the other hand, windings 18 and 25 are connected such that when voltages are induced therein, as the windings are traversed by symmetrically changing magnet fields, said voltages will cancel each other, that is, the windings are oppositely interconnected. When, however, the asymmetrical section of the magneto wheel is passed by the core legs concerned voltage pulses will be induced which can be tapped at the tapping points 28 and 29. It is assumed that the magneto flywheel is rotated in the direction of arrow 30.

### Operation of the arrangement

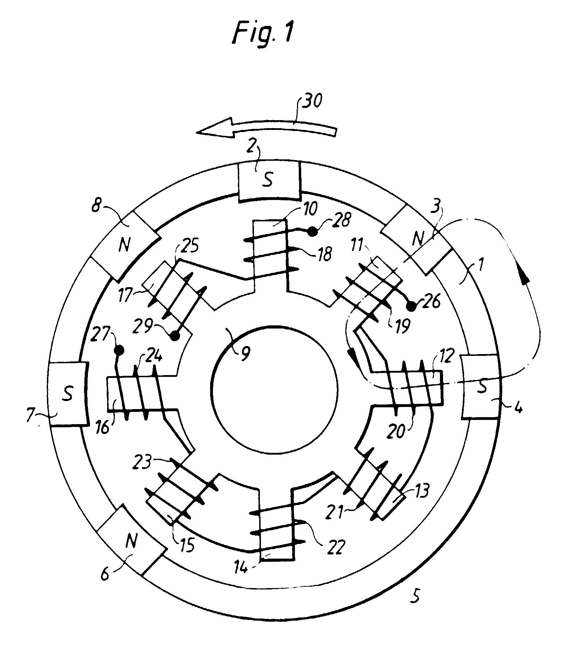

In Fig. 1 the magneto flywheel has such a rotational position that core legs 10, 11, 12, 15, 16 and 17 are traversed by a symmetrically alternating field, whereas core legs 13 and 14 do not coact with any magnet pole. In this momentary position there is generated in the windings 19, 20, 23 and 24 voltages which create, by the series connection, a summation voltage which can be tapped at tapping points 26 and 27. As mentioned before, in this moment the core legs 13 and 14 are not exposed to any essential induction as they are only affected by stray fields. Consequently lower voltages may arise in the windings 21 and 22, which voltages can be added to or substracted from the other voltages generated in associated windings. During the moment just mentioned of the magneto flywheel rotation core legs 10 and 17 are traversed by a symmetrically alternating field, which means that those voltages generated in associated coils 18 and 25 cancel one another. Thus there will be no resultant voltage at tapping points 28 and 29.

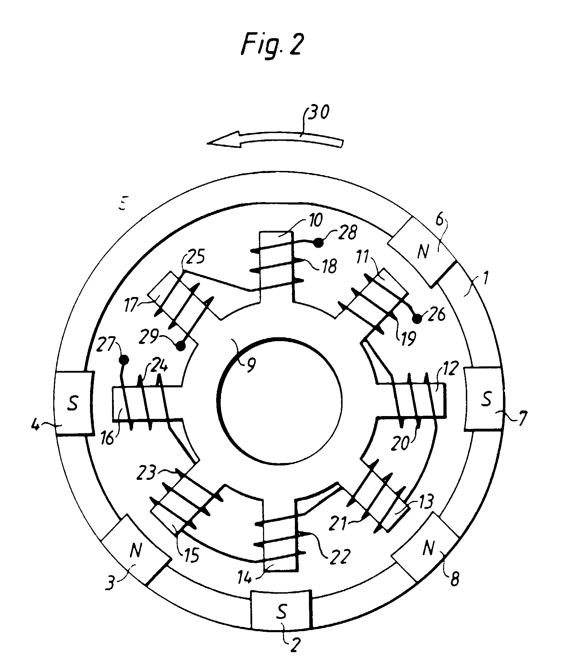

When the magneto flywheel has rotated into a position as shown in Fig. 2, core legs 11, 12, 13, 14, 15 and 16 are traversed by a symmetrically alternating magnet flux. Core legs 10 and 17, however, do not cooperate with any magnet pole. As stated before, when the borders or ends of section 5 pass core legs 10 and 17 an asymmetry in the magetic field arises, which results in voltage pulses induced in windings 18 and 25, causing a resultant voltage to arise between tapping points 28 and 29. Said last mentioned voltage is considerably lower than the voltage arising across tapping points 26 and 27. Now, this fact can be utilized to advantage in such a way that the voltage across tapping points 26 and 27 is used for charging a charge capacitor (about 400 volts) present in the ignition system, whereas the voltage which can be tapped across points 28 and 29 is used for controlling the ignition process. The voltage arising across the last mentioned tapping points is only a fraction of the first mentioned voltage (in practice about 5 volts).

Consequently, by an arrangement as described above a very advantageous generator means can be obtained for driving an ignition system, for instance, for power saws. From the point of manufacture the structure is extremely favourable as all coils can be constructed uniformly, which means that those windings which are intended for controlling the ignition need not be specifically dimensioned, which is normally the case, but the whole device can be mounted in e.g. an automatic winding machine which winds, in an equivalent manner, one coil after another on the respective core leg. By this construction and by the asymmetrical, in view of magnet flux, section of the magnet pole path and by the two windings 18 and 25 being connected in opposition it is attained that one adequate voltage is obtained for charging the ignition capacitor concerned and one adequate voltage is obtained for controlling the ignition process. Furthermore, it should be pointed out that a marked voltage pulse is obtained for trigging the ignition process, e.g. in the rotational position preceding that shown in Fig. 2.

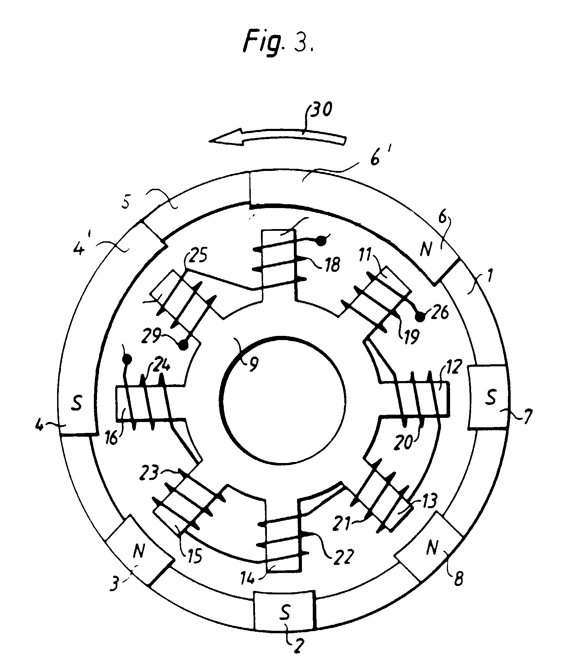

From the point of induction, controlling the ignition process by means of voltages induced by asymmetry in the magnet path is no ideal procedure as, due to stray inductions, voltage wave forms of a none-desired character arise. It is therefore desirable to concentrate in general the induction area to a smaller section of the magnet path. Fig. 3 illustrates a solution in accordance to which magnets 4 and 6 have been extended so as to form poles 4' and 6'. Then the free space 5 will be considerably shorter than in Figs. 1 and 2, bringing with it that the field concentration there will be more manifest. By the arrangement shown the space 5 will here be equal to the distance between the other magnets, that is, a balanced symmetry is created. In applying such a solution the voltage wave intended for trigging will be considerably "cleaner" and more pronounced then in the case according to Figs. 1 and 2.

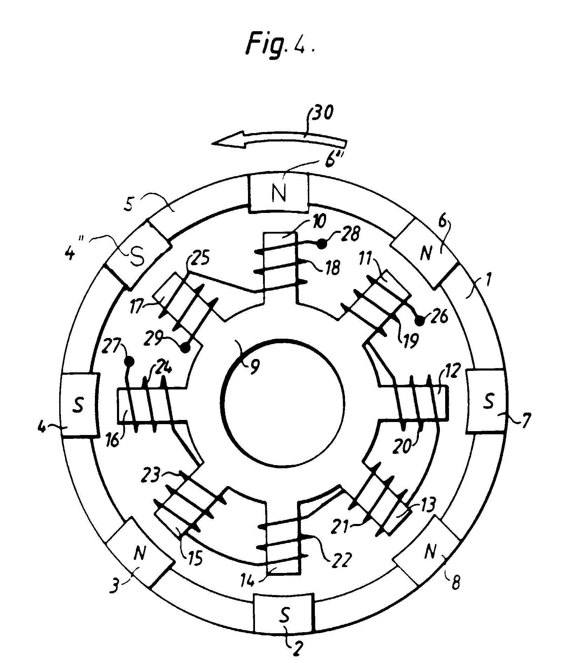

The arrangement in accordance with Fig. 4 is equivalent, in principle, to the arrangement of Fig. 3, although no interconnected poles are used here but two separate magnets located in the section 5 according to Figs. 1 and 2 and arranged such that two north poles will be next to each other on one side of section 5 and two south poles next to each other on the other side.

As a matter of course an arrangement according to the invention can be provided for controlling several ignition processes, that is, several pairs of cooperating windings, such as 18 and 25, can be provided. This means that the number of core legs could suitably be increased beyond what has been shown above, as well as the number of magnet poles.

## Claims

1. A generator for internal combustion engine including an ignition system with a charge capacitor, with a particular arrangement of its elements, comprising a flywheel (1) with magnet poles (2-4, 6-8) distributed thereon, said flywheel cooperating with a magnet core (9) having several legs (10-17) arranged at core leg pitches, said arrangement being such that, at sections without asymmetry of the flywheel along its periphery, as many north poles as south poles are provided which are distributed, along the periphery of the flywheel, regularly and such that north poles and south poles are alternately arranged, with regular spaces or pitches between adjacent magnet poles, in correspondence to the distribution of legs of the core, and that at at least one asymmetrical section of the flywheel along its periphery the distribution of magnet poles exhibits an asymmetry with respect to the regular distribution of the magnet poles at the symmetrical section, that the asymmetrical section substantially corresponds to two core leg pitches, the legs of the core carrying windings (18-25) which electrically form a first group (18, 25) for controlling the ignition process of said internal combustion engine and a second group (19-24) for charging the capacitor, the first group comprising two windings (18, 25) on adjacent legs (10, 17) and so connected that the voltages induced at sections without asymmetry will cancel one another;
**characterized in that** the flywheel surrounds the magnetic core, which is stationary, that the second group has its windings interconnected such that they cooperate to form a sum voltage (26, 27) including induction from symmetrical as well as asymmetrical sections of the flywheel along its periphery, that the first group creates, when passing the borders of the asymmetrical section, an induced voltage (28, 29) lower than the voltage induced by the second group, and that the windings of the first and the second group are wound in the same way in one and the same working operation.

2. A generator according to claim 1, **characterized in that** two magnets (4, 6), each belonging to the section without asymmetry of the flywheel and respectively adjacent to the section with asymmetry, are extended (4', 6') respectively into the section with asymmetry. (Figure 3)

3. A generator according to claim 2, **characterized in that** said extended magnets (4,4'; 6,6')each covers a periphery area of the flywheel substantially corresponding to one core leg pitch. (Figure 3)

4. A generator according to claim 1, **characterized in that** an asymmetrical section includes two magnets (4", 6") of different polarity so arranged that a north pole (6") within said asymmetrical section will be located adjacent a north pole (6) within a section without asymmetry, whereas a south pole (4") within said asymmetrical section will be located adjacent a south pole (4) within said section without asymmetry. (Figure 4)

## Patentansprüche

1. Generator für eine ein Zündsystem mit einem Ladungskondensator aufweisende Verbrennungskraftmaschine, der eine spezielle Anordnung seiner Elemente aufweist und der ein Schwungrad (1) mit an diesem verteilten Magnetpolen (2-4, 6-8) umfaßt, wobei das Schwungrad mit einem Magnetkern (9) zusammenwirkt, welcher mehrere Schenkel (10-17), die in Kernschenkelabständen angeordnet sind, aufweist, und wobei die Anordnung so ausgebildet ist, daß in Abschnitten ohne entlang dem Umfang des Schwung rads vorgesehener Asymmetrie genausoviele Nordpole wie Südpole angeordnet sind, welche gleichmäßig über den Umfang des Schwung rads verteilt und welche so angeordnet sind, daß sich Nordpole und Südpole abwechseln, wobei in Übereinstimmung mit der Verteilung der Schenkel des Kerns gleichmäßige Zwischenräume oder Abstände zwischen benachbarten Magnetpolen vorgesehen sind, und daß in wenigstens einem asymmetrischen Abschnitt entlang dem Umfang des Schwungrads die Verteilung der Magnetpole eine Asymmetrie hinsichtlich der gleichmäßigen Verteilung der Magnetpole in dem symmetrischen Abschnitt aufweist, und daß sich der asymmetrische Abschnitt im wesentlichen über zwei Kernschenkelabstände erstreckt, wobei die Schenkel des Kerns Wicklungen (18-25) tragen, die in elektrischer Hinsicht eine erste Gruppe (18, 25) zum Steuern des Zündvorgangs der Verbrennungskraftmaschine und eine zweite Gruppe (19-24) zum Laden des Kondensators bilden, wobei die erste Gruppe zwei Wicklungen (18, 25) an benachbarten Schenkeln (10, 17) aufweist und derart verbunden ist, daß sich die in Abschnitten ohne Asymmetrie induzierten Spannungen gegeneinander aufheben;
**dadurch gekennzeichnet, daß**
das Schwungrad den Magnetkern, der ortsfest ist, umgibt, daß die Wicklungen der zweiten Gruppe so miteinander verbunden sind, daß sie zwecks Bildung einer Summenspannung (26, 27), die die sowohl in dem symmetrischen als auch dem asymmetrischen Abschnitt entlang dem Umfang des Schwungrads auftretende Induktion beinhaltet, zusammenwirken, daß die erste Gruppe beim Passieren der Grenzen des asymmetrischen Abschnitts eine Induktionsspannung (28, 29) erzeugt, die geringer ist als die von der zweiten Gruppe induzierte Spannung, und daß die Wicklungen der ersten und der zweiten Gruppe in derselben Weise in ein und demselben Arbeitsgang gewickelt sind.

2. Generator nach Anspruch 1,
**dadurch gekennzeichnet, daß**
zwei Magnete (4, 6), von denen jeder zu dem Abschnitt ohne Asymmetrie des Schwungrades gehört und dementsprechend an den Abschnitt mit Asymmetrie angrenzt, entsprechend in den Abschnitt mit Asymmetrie verlängert (4', 6') sind. (Fig. 3)

3. Generator nach Anspruch 2,
**dadurch gekennzeichnet, daß**
jeder der verlängerten Magnete (4, 4'; 6, 6') einen Umfangsbereich des Schwungrads abdeckt, der im wesentlichen einem Kernschenkelabstand entspricht. (Fig. 3)

4. Generator nach Anspruch 1,
**dadurch gekennzeichnet, daß**
ein asymmetrischer Abschnitt zwei Magnete (4", 6") gegensätzlicher Polarität aufweist, die so angeordnet sind, daß ein Nordpol (6") innerhalb des asymmetrischen Abschnitts zu einem Nordpol (6) innerhalb eines Abschnitts ohne Asymmetrie benachbart liegt, während ein Südpol (4") innerhalb des asymmetrischen Abschnitts einem Südpol (4) innerhalb des Abschnitts ohne Asymmetrie benachbart ist. (Fig. 4)

## Revendications

1. Un générateur pour moteur à combustion interne comportant un système d'allumage avec un condensateur de charge, présentant un agencement particulier de ses éléments, comprenant un volant (1) avec des pôles magnétiques (2-4, 6-8) répartis dessus, ledit volant coopérant avec un noyau magnétique (9) présentant plusieurs branches (10-17) disposées à des pas de branches du noyau, ladite disposition étant telle que, au niveau de parties sans asymétrie du volant le long de sa périphérie, on prévoit autant de pôles nord que de pôles sud qui sont répartis, le long de la périphérie du volant, de manière régulière et telle que des pôles nord et des pôles sud soient disposés de manière alternée, avec des espaces ou des pas réguliers entre pôles magnétiques adjacents, en correspondance de la répartition des branches du noyau, et qu'à au moins une partie asymétrique du volant le long de sa périphérie la répartition des pôles magnétiques présente une asymétrie par rapport à la répartition régulière des pôles magnétiques à la partie symétrique, que la partie asymétrique corresponde sensiblement à deux pas de branche du noyau, les branches du noyau portant des enroulements (18-25) qui constituent électriquement un premier groupe (18, 25) pour commander le processus d'allumage dudit moteur à combustion interne et un second groupe (19-24) pour charger le condensateur, le premier groupe comprenant deux enroulements (18, 25) sur des branches adjacentes (10, 17) et reliés de telle manière que les tensions induites aux parties sans asymétrie s'annulent l'une l'autre ; **caractérisé en ce que** le volant entoure le noyau magnétique, lequel est fixe, en ce que le second groupe a ses enroulements reliés entre eux de telle manière qu'ils coopèrent pour former une tension somme (26, 27) incluant une induction par rapport aux parties symétriques ainsi qu'asymétriques du volant le long de sa périphérie, en ce que le premier groupe crée, en passant les bords de la partie asymétrique, une tension induite (28, 29) inférieure à la tension induite par le second groupe, et en ce que les enroulements du premier et du second groupe sont enroulés de la même façon dans une seule et unique opération de travail.

2. Un générateur selon la revendication 1, **caractérisé en ce que** deux aimants (4, 6), appartenant chacun à la partie sans asymétrie du volant et respectivement adjacents à la partie avec asymétrie, s'étendent respectivement (4', 6') dans la partie avec asymétrie. (Figure 3).

3. Un générateur selon la revendication 2, **caractérisé en ce que** lesdits aimants étendus (4, 4' ; 6, 6') recouvrent chacun une zone de la périphérie du volant correspondant sensiblement à un pas de branche du noyau. (Figure 3).

4. Un générateur selon la revendication 1, **caractérisé en ce qu'**une partie asymétrique comprend deux aimants (4", 6") de polarité différente montés de telle manière qu'un pôle nord (6") à l'intérieur de ladite partie asymétrique sera placé de manière adjacente à un pôle nord (6) à l'intérieur d'une partie sans asymétrie, alors qu'un pôle sud (4") à l'intérieur de ladite partie asymétrique sera placé de manière adjacente à un pôle sud (4) à l'intérieur de ladite partie sans asymétrie. (Figure 4).
